# EUROPEAN PATENT SPECIFICATION

(11) **EP 1 189 515 B1**
(45) Date of publication and mention of the grant of the patent: **29.10.2003**
(21) Application number: 00940659.6
(22) Date of filing: 29.06.2000
(51) Int. Cl.: A21D 13/00, A21D 8/02, A21C 9/04, A21D 13/08

(54) **METHOD AND APPARATUS TO PROVIDE MARKING ON BREAD**
VERFAHREN UND VORRICHTUNG ZUM MARKIEREN VON BROT
PROCEDE ET APPAREIL POUR MARQUER UN MOTIF SUR UN PAIN

(30) Priority: 29.06.1999 GB 9915016
(43) Date of publication of application: 27.03.2002
(73) Proprietor: William Price and Sons Ltd., West Midlands WS2 8LB (GB)
(72) Inventor: CLARKE, Brian, Arthur, Bicester OX6 8GP (GB)
(74) Representative: Dempster, Benjamin John Naftel
(86) International application number: GB0002503
(87) International publication number: WO01000035

(56) References cited:
- DE-A- 3 913 308
- GB-A- 2 177 585
- GB-A- 2 291 578
- GB-A- 2 299 741
- US-A- 5 759 606

## Description

The invention relates to a method and apparatus for use in making bread to provide marking on the resulting bread.

It is known to indent a word into the side of a baking tin in which dough is baked to make bread so that the resulting bread has the word spelt out in relief. It can be difficult to make out the word created in this way.

GB-A-2 177 585 teaches a method for coating of food products, in which the product is subjected to a stream of coating material, the velocity of which is such that the coating material is captured by the surface of the product and remains so throughout subsequent storage and handling.

According to one aspect of the invention, there is provided a method for use in making bread to provide marking on the resulting bread, the method comprising the steps of depositing moisture on a surface of the dough for the bread, depositing flour on the said surface of the dough, one or both of the flour and the moisture being deposited in a desired predetermined pattern so that flour is retained by moisture on the dough in a predetermined pattern, and baking the dough.

In this way, a word, picture or other desired pattern can be produced on the bread and the use of flour results in a pale contrast with the remainder of the loaf so that the word, picture or other pattern is readily understood or recognised. Furthermore, even if the pattern is rubbed, as the process results in the pattern being shallowly indented, flour tends to remain at the edges of the pattern where there is an abrupt change in the surface level so that the contrasting pattern is still clear in outline.

The moisture is preferably water or principally water. In another embodiment the moisture is milk or a mixture of milk and water. In a further embodiment the moisture is a combination of egg and water and in a further embodiment the moisture is a solution of sugar in water.

The method may include the step of proving the dough for the bread and the moisture may be deposited during proving for example as a result of raised humidity, or may be deposited after proving. The moisture may be deposited in any suitable manner and may be deposited by spraying.

Preferably the flour is deposited in a predetermined pattern. The flour may be deposited on the dough in any desired manner and may be deposited through a stencil to achieve the predetermined pattern. Preferably, the stencil is arranged less than 3cm from the surface of the dough.

According to another aspect of the invention, there is provided apparatus for use in making bread to provide marking on the resulting bread, the apparatus comprising an oven, means defining a pathway to the oven, means on the pathway upstream of the oven for depositing moisture on a surface of the dough for the bread, and means on the pathway between the moisture depositing means and the oven for depositing flour on the said surface of the dough, one or both of the moisture depositing means and the flour depositing means being arranged to deposit in a predetermined pattern so that flour is retained by moisture on the dough in a predetermined pattern.

The moisture depositing means may take any suitable form and may comprise a proving box. In another embodiment, the moisture depositing means comprises means for spraying moisture onto the dough.

Preferably the flour depositing means is arranged to deposit in a predetermined pattern. The means to deposit the flour is a stencil. The stencil is arranged less than 3cm from the anticipated level of the surface of the dough. The flour depositing means may include vibration means. The vibration means is preferably arranged to vibrate in the direction of intended deposition. This reduces any lack of definition in the pattern due to the vibration.
The apparatus may include conveying means for conveying dough along the pathway, the conveying means defining the pathway. The conveying means may comprise a conveyor belt. The apparatus may include means to stop the movement of the dough along the pathway when the dough is aligned with the means for depositing flour. Where conveying means is provided, the apparatus may include means to stop the conveying means when the dough is aligned with the means for depositing flour. The stopping means may include a sensor to sense the position of the dough and the sensor may include a photocell.

An embodiment of the invention will now be described by way of example and with reference to the accompanying drawings, in which:
Fig. 1 is a schematic plan view of the apparatus of the embodiment of the invention;
Fig. 2 is a detail side elevation at A-A' of the apparatus of Fig. 1; and,
Fig. 3 is an end elevation in partial cross-section at B-B' of the apparatus of Fig. 1.

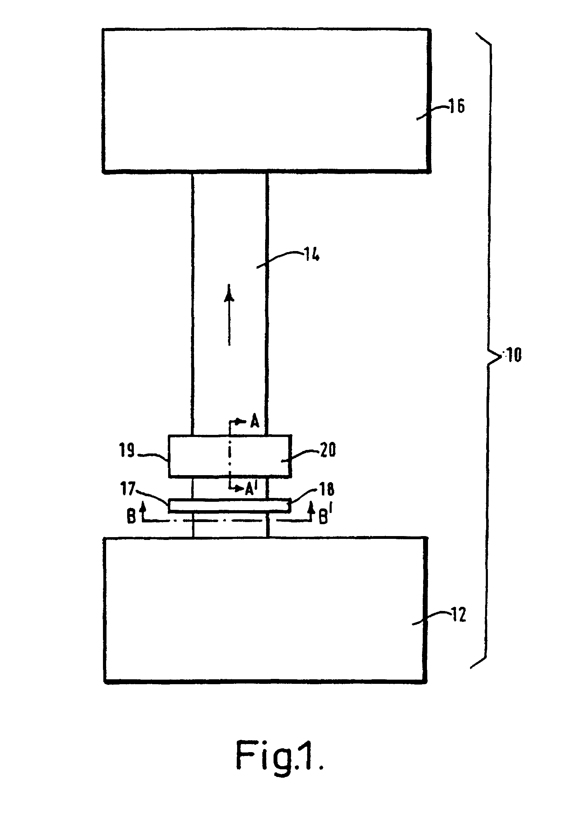

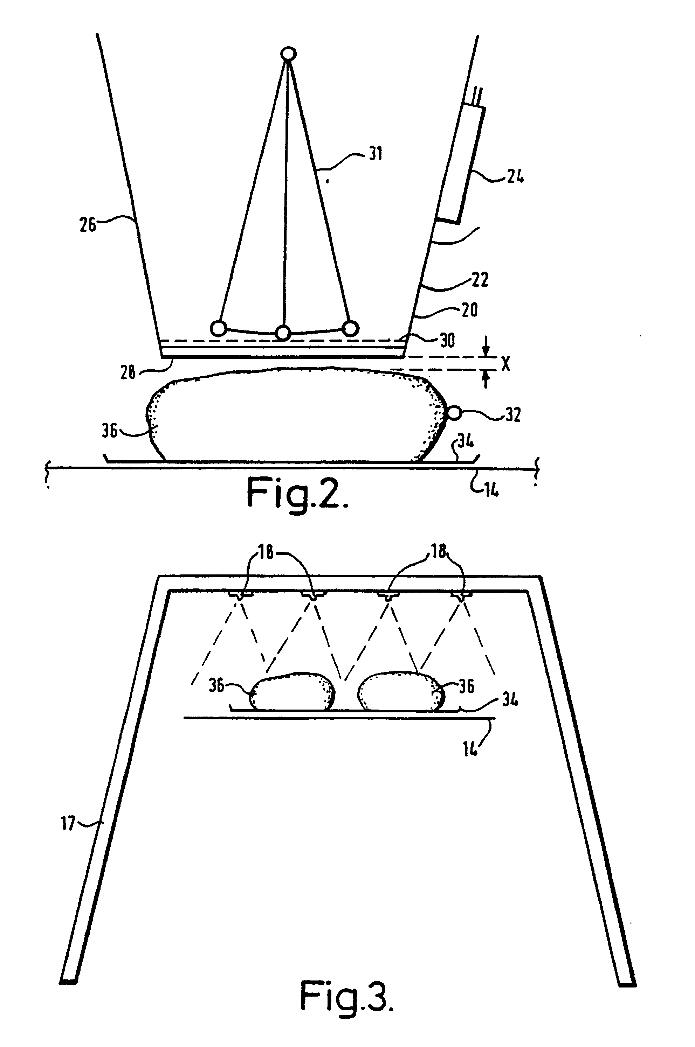

The apparatus 10 of the embodiment as shown in Fig. 1 includes a proving box 12 and a conveyor belt 14 to convey dough from the proving box 12 to an oven 16 in the direction of the arrow. There are two gantries 17,19 spanning the conveyor belt 14. The first gantry 17, which is adjacent the proving box 12, supports a plurality of water spraying nozzles 18 over the conveyor belt 14. The second gantry 19, which is adjacent the first gantry 17, supports a vibration hopper 20 shown in more detail in Fig. 2.

The vibration hopper 20 consists of an open topped hopper 22 to be agitated by a pneumatic ram 24 located on one side of the hopper 22 and arranged to vibrate the hopper 22 in a substantially vertical direction. The hopper 22 consists of continuous side walls 26 which are angled slightly outwardly and a horizontal floor. The horizontal floor of the hopper 22 is formed of a stencil 28 which may for example include two groups of apertures, each in a pattern to spell out the word "organic". The stencil 28 is preferably very accurately cut and may be laser cut from sheet metal which may be several millimetres thick. A sieve 30 is located above the stencil 28 and entirely covers the floor of the hopper 22. A powered agitator 31 is provided above the sieve 30 to agitate flour in the hopper 22 to prevent compacting of the flour.

A photocell sensor 32 is supported on the vibration hopper gantry 19 to sense interruption of a horizontal light beam passing across the conveyor belt 14.

In use, dough will be made up and put on trays 34. Pieces of dough 36 on the trays 34 will arrive in the proving box 12. After proving at raised humidity and temperature, each tray 34 is transported out of the proving box 12 on the conveyor belt 14 to pass under the first gantry 17 which emits a continuous fine spray of water from the spraying nozzles 18 to leave a continuous uniform layer of water on the upper surface of the pieces of dough 36. The conveyor belt 14 continues to move until the leading edge of one of the pieces of dough 36 interrupts the light beam to the photosensor 32. The photosensor 32 thus sends a signal to the motor (not shown) operating the conveyor belt 14 so that the motor stops the conveyor belt 14. In this position, two pieces of dough 36 on the tray 34 are aligned with the vibration hopper 22 underneath the stencil 28. Once the conveyor belt 14 has stopped, a signal is sent to the pneumatic cylinder 24 to vibrate the hopper 22 which results in flour passing through the sieve 30 and through the stencil 28 to be deposited on the moist upper surface of the two pieces of dough. Each piece of dough 36 thus receives flour in a pattern to spell the word "organic". The vertical distance X in Fig. 2 between the top of the two pieces of dough 36 and the lower surface of the stencil 28 is controlled to be about 30mm. After the flour has been deposited, the vibration is stopped, the conveyor belt 14 is started again by its motor and the next two pieces of dough on a tray come forwards.

The dough is conveyed by the conveyor belt 14 into the oven 16 to be baked and the flour which has stuck to the moist surface of the dough is baked on. It thus forms a white or off-white pattern on the brown surface of the loaf which is clearly legible. The area of the surface of the dough where the flour is received will not rise as well as the dough around it and so there is a slight indentation under the flour. Thus, if the flour is rubbed off the marking will remain as an indentation. In any case, as the pattern is hard edged there tends to be a lip at the edges which acts to retain flour even if flour has been rubbed off elsewhere so that the pattern remains in outline at least.

In another embodiment, the humidity of the proving box 12 is so high that a continuous layer of moisture results and the first gantry 17 and water spraying nozzles 18 are not required.

In a further embodiment, the water may be sprayed to cover only a narrow strip along the centre of each piece of dough 36 where the flour is to be deposited.

In another embodiment the water may be applied by contact with an absorbent body such as a brush or sponge.

The stencil 28 may spell any desired word or may define a picture or abstract design for example.

While an automated system has been described, the method could be carried out under manual control.

## Claims

1. A method for use in making bread to provide marking on the resulting bread, the method comprising the steps of depositing moisture on a surface of the dough for the bread, depositing flour on the said surface of the dough, one or both of the flour and the moisture being deposited in a desired predetermined pattern so that flour is retained by moisture on the dough in a predetermined pattern, and baking the dough.

2. A method as claimed in claim 1, wherein the moisture is water or principally water.

3. A method as claimed in claim 1, wherein the moisture is milk or a mixture of milk and water.

4. A method as claimed in claim 1, wherein the moisture is a combination of egg and water.

5. A method as claimed in claim 1, wherein the moisture is a solution of sugar in water.

6. A method as claimed in any preceding claim, wherein the method includes the step of proving the dough for the bread and the moisture is deposited during proving.

7. A method as claimed in claim 6, wherein the moisture is deposited by means of raised humidity.

8. A method as claimed in any of claims 1 to 5, wherein the method includes the step of proving the dough for the bread and the moisture is deposited after proving.

9. A method as claimed in any of claims 1 to 5, wherein the moisture is deposited by spraying.

10. A method as claimed in any preceding claim, wherein the flour is deposited in a predetermined pattern.

11. A method as claimed in claim 10, wherein the flour is deposited through a stencil to achieve the predetermined pattern.

12. A method as claimed in claim 11, wherein the stencil is arranged less than 3cm from the surface of the dough.

13. Apparatus for use in making bread to provide marking on the resulting bread, the apparatus comprising an oven, means defining a pathway to the oven for dough for bread, means on the pathway for depositing moisture on a surface of the dough for the bread, and means on the pathway between the moisture depositing means and the oven for depositing flour on the said surface of the dough, the flour depositing means being arranged to deposit in a predetermined pattern by depositing through a stencil so that flour is retained by moisture on the dough in a predetermined pattern, the stencil being arranged less than or about 30 mm from the anticipated level of the surface of the dough.

14. Apparatus as claimed in claim 13, wherein the moisture depositing means comprises a proving box.

15. Apparatus as claimed in claim 13, wherein the moisture depositing means comprising means for spraying moisture onto the dough.

16. Apparatus as claimed in claim 13, 14 or 15, wherein the flour depositing means includes vibration means.

17. Apparatus as claimed in claim 16, wherein the vibration means is arranged to vibrate in the direction of intended deposition.

18. Apparatus as claimed in any of claims 13 to 17, wherein the apparatus includes conveying means for conveying dough along the pathway, the conveying means defining the pathway.

19. Apparatus as claimed in any of claims 13 to 18, wherein the apparatus includes means to stop the movement of the dough along the pathway when the dough is aligned with the means for depositing flour.

20. Apparatus as claimed in claim 19, wherein conveying means is provided, the apparatus includes stopping means to stop the conveying means when the dough is aligned with the means for depositing flour.

21. Apparatus as claimed in claim 20, wherein the stopping means includes a sensor to sense the position of the dough.

22. Apparatus as claimed in claim 21, wherein the sensor includes a photocell.

## Patentansprüche

1. Verfahren zur Markierung des bei der Brotherstellung gewonnenen Brotes, welches Verfahren folgende Schritte umfaßt:
Deponieren von Feuchtigkeit auf einer Oberfläche des Teiges für das Brot,
Ablagern von Mehl auf der Oberfläche des Teiges, wobei das Mehl und/oder die Feuchtigkeit in einem gewünschten vorgegebenen Muster abgelegt werden, so dass das Mehl durch die Feuchtigkeit auf dem Teig in einem vorgegebenen Muster gehalten wird, und
Backen des Teigs.

2. Verfahren nach Anspruch 1, bei dem die Feuchtigkeit Wasser oder im wesentlichen Wasser ist.

3. Verfahren nach Anspruch 1, bei dem die Feuchtigkeit Milch oder ein Gemisch aus Milch und Wasser ist.

4. Verfahren nach Anspruch 1, bei dem die Feuchtigkeit eine Kombination aus Ei und Wasser ist.

5. Verfahren nach Anspruch 1, bei dem die Feuchtigkeit eine Lösung aus Zukker in Wasser ist.

6. Verfahren nach einem der vorgehenden Ansprüche, bei dem das Verfahren den zusätzlichen Schritt des Prüfens des Teiges für das Brot enthält und die Feuchtigkeit während dieses Prüfvorganges deponiert wird.

7. Verfahren nach Anspruch 6, bei dem die Feuchtigkeit mit Hilfe von erhöhter Luftfeuchtigkeit aufgebracht wird.

8. Verfahren nach einem der Ansprüche 1 bis 5, bei dem das Verfahren den Schritt des Prüfens des Teiges für das Brot enthält und die Feuchtigkeit nach dem Prüfen aufgebracht wird.

9. Verfahren nach einem der Ansprüche 1 bis 5, bei dem die Feuchtigkeit durch Sprühen aufgebracht wird.

10. Verfahren nach einem der vorhergehenden Ansprüche, bei dem das Mehl in einem vorgegebenen Muster aufgebracht wird.

11. Verfahren nach Anspruch 10, bei dem das Mehl durch eine Schablone zur Erzielung eines vorgegebenen Musters aufgebracht wird.

12. Verfahren nach Anspruch 11, bei dem die Schablone weniger als 3 cm von der Oberfläche des Teiges entfernt ist.

13. Vorrichtung zum Markieren von bei der Brotherstellung gewonnenem Brot, welche Vorrichtung einen Ofen, Mittel zur Bildung eines Weges zu dem Ofen für den Teig für das Brot, Mittel an den Weg zur Ablagerung von Feuchtigkeit auf einer Oberfläche des Teiges für das Brot und Mittel an dem Weg zwischen den Mitteln zur Feuchtigkeitsablagerung und dem Ofen umfaßt, die zur Ablagerung von Mehl auf der Oberfläche des Teiges dienen, wobei die Mittel zur Ablagerung von Mehl so ausgebildet sind, dass sie das Mehl in einem vorbestimmten Muster durch Ablagerung durch eine Schablone aufbringen, derart, dass das Mehl durch die Feuchtigkeit auf dem Teig in einem vorgegebenen Muster gehalten wird, wobei die Schablone weniger als etwa 30 mm von der angenommenen Oberfläche des Teiges entfernt ist.

14. Vorrichtung nach Anspruch 13, bei der die Mittel zur Aufbringung von Feuchtigkeit eine Prüfbox umfaßt.

15. Vorrichtung nach Anspruch 13, bei der Mittel zur Aufbringung von Feuchtigkeit Mittel zum Aufsprühen von Feuchtigkeit auf den Teig umfassen.

16. Vorrichtung nach einem der Ansprüche 13, 14 oder 15, bei der die Mittel zum Aufbringen von Mehl Vibrationsmittel umfassen.

17. Vorrichtung nach Anspruch 16, bei der die Vibrationsmittel in der Richtung der gewünschten Ablagerung vibrieren.

18. Vorrichtung nach einem der Ansprüche 13 - 17, bei der Fördermittel zum Fördern des Teiges über den Weg vorgesehen sind und die Fördermittel den Weg definieren.

19. Vorrichtung nach einem der Ansprüche 13 - 18, bei der Mittel zum Beenden der Bewegung des Teiges über den Weg, wenn der Teig mit den Mitteln zur Deponierung von Mehl ausgerichtet ist, umfassen.

20. Vorrichtung nach Anspruch 19, bei der Fördermittel vorgesehen sind und die Vorrichtung Anhaltemittel umfassen, die die Fördermittel anhalten, wenn der Teig mit den Mitteln zur Ablagerung von Mehl ausgerichtet ist.

21. Vorrichtung nach Anspruch 20, bei der die Anhaltemittel einen Sensor zum Abtasten der Position des Teiges umfassen.

22. Vorrichtung nach Anspruch 21, bei der der Sensor eine Fotozelle umfaßt.

## Revendications

1. Procédé à utiliser dans la fabrication du pain pour marquer un motif sur le pain obtenu, le procédé comprenant les étapes suivantes: le dépôt d'une humidité sur une surface de la pâte à pain, le dépôt de farine sur ladite surface de la pâte, l'un et/ou l'autre de la farine et de l'humidité étant déposée(s) selon un motif désiré prédéterminé de telle sorte que la farine soit retenue sur la pâte par l'humidité pour former un motif prédéterminé, et la cuisson de la pâte.

2. Procédé suivant la revendication 1, dans lequel l'humidité est de l'eau ou principalement de l'eau.

3. Procédé suivant la revendication 1, dans lequel l'humidité est du lait ou un mélange de lait et d'eau.

4. Procédé suivant la revendication 1, dans lequel l'humidité est une combinaison d'oeuf et d'eau.

5. Procédé suivant la revendication 1, dans lequel l'humidité est une solution de sucre dans l'eau.

6. Procédé suivant l'une quelconque des revendications précédentes, dans lequel le procédé comprend l'étape de levage de la pâte à pain, l'humidité étant déposée durant le levage.

7. Procédé suivant la revendication 6, dans lequel l'humidité est déposée au moyen d'une humidité accrue.

8. Procédé suivant l'une quelconque des revendications 1 à 5, dans lequel le procédé comprend l'étape de levage de la pâte à pain, l'humidité étant déposée après le levage.

9. Procédé suivant l'une quelconque des revendications 1 à 5, dans lequel l'humidité est déposée par pulvérisation.

10. Procédé suivant l'une quelconque des revendications précédentes, dans lequel la farine est déposée selon un motif prédéterminé.

11. Procédé suivant la revendication 10, dans lequel la farine est déposée par l'intermédiaire d'un pochoir afin d'obtenir le motif prédéterminé.

12. Procédé suivant la revendication 11, dans lequel le pochoir est positionné à moins de 3 cm de la surface de la pâte.

13. Appareil à utiliser dans la fabrication du pain pour marquer un motif sur le pain obtenu, l'appareil comprenant un four, des moyens définissant un trajet conduisant au four pour la pâte à pain, des moyens sur le trajet pour déposer une humidité sur une surface de la pâte à pain, et des moyens sur le trajet entre les moyens de dépôt d'humidité et le four pour déposer de la farine sur ladite surface de la pâte, les moyens de dépôt de farine étant arrangés de manière à déposer celle-ci selon un motif prédéterminé en la déposant par l'intermédiaire d'un pochoir, de telle sorte que la farine soit retenue selon un motif prédéterminé par l'humidité présente sur la pâte, le pochoir étant positionné à moins de ou à environ 30 mm du niveau anticipé de la surface de la pâte.

14. Appareil suivant la revendication 13, dans lequel les moyens de dépôt d'humidité comprennent une cuve de levage.

15. Appareil suivant la revendication 13, dans lequel les moyens de dépôt d'humidité comprennent des moyens pour pulvériser l'humidité sur la pâte.

16. Appareil suivant la revendication 13, 14 ou 15, dans lequel les moyens de dépôt de farine comprennent des moyens de vibration.

17. Appareil suivant la revendication 16, dans lequel les moyens de vibration sont arrangés de manière à vibrer dans la direction du dépôt voulu.

18. Appareil suivant l'une quelconque des revendication 13 à 17, dans lequel l'appareil comprend des moyens de transport pour transporter la pâte le long du trajet, les moyens de transport définissant le trajet.

19. Appareil suivant l'une quelconque des revendications 13 à 18, dans lequel l'appareil comprend des moyens pour arrêter le déplacement de la pâte le long du trajet lorsque la pâte est alignée avec les moyens de dépôt de farine.

20. Appareil suivant la revendication 19, dans lequel il est prévu des moyens de transport, l'appareil comprenant des moyens d'arrêt pour arrêter les moyens de transport lorsque la pâte est alignée avec les moyens de dépôt de farine.

21. Appareil suivant la revendication 20, dans lequel les moyens d'arrêt comprennent un capteur servant à détecter la position de la pâte.

22. Appareil suivant la revendication 21, dans lequel le capteur comprend une cellule photoélectrique.
